# EUROPÄISCHE PATENTSCHRIFT

(11) **EP 0 487 919 B1**
(45) Veröffentlichungstag und Bekanntmachung des Hinweises auf die Patenterteilung: **07.12.1994**
(21) Anmeldenummer: 91118497.6
(22) Anmeldetag: 30.10.1991
(51) Int. Cl.: G01M 3/32

(54) **Lecksuchgerät**
Leak detector apparatus
Appareil détecteur de fuites

(30) Priorität: 26.11.1990 DE 4037524
(43) Veröffentlichungstag der Anmeldung: 03.06.1992
(73) Patentinhaber: LEYBOLD AKTIENGESELLSCHAFT, D-63450 Hanau (DE)
(72) Erfinder: Holthaus, Ernst, W-5060 Bergisch-Gladbach 2 (DE)
(74) Vertreter: Leineweber, Jürgen, Dipl.-Phys.

(56) Entgegenhaltungen:
- EP-A- 0 037 384
- EP-A- 0 451 543
- DE-A- 2 422 261
- DE-A- 3 038 926
- GB-A- 2 130 734
- US-A- 3 691 821
- SOVIET INVENTIONS ILLUSTRATED,Section EI, Week 9117, 12. Juni 1991, Derwent Publications Ltd., London, GB; Class S, AN 91-123475/17 & SU-A-1322775
- SOVIET INVENTIONS ILLUSTRATED, Section EI, Week 8942, 29. November 1989, Derwent Publications Ltd., London, GB; Class S, AN 89-307977/42 & SU-A-1451574

## Beschreibung

Die Erfindung bezieht sich auf ein Lecksuchgerät für den Einsatz bei der Vakuumlecksuche mit einem Testgasdetektor, mit einer Vorvakuumpumpe sowie mit den Ablauf des Lecksuchprozesses steuernden Ventilen.

Es ist bekannt, bei einem auf Lecks zu untersuchenden Prüfling oder dergleichen im Bereich der Wandung des Prüflings einen Differenzdruck zu erzeugen. Die Feststellung eines eventuell vorhandenen Lecks erfolgt mit Hilfe eines Testgases, das sich auf der Seite mit dem höheren Druck befindet und das im Falle eines Lecks durch die Wandung des Prüflings gelangt. Bei der Vakuumlecksuche wird der Differenzdruck dadurch erzeugt, daß auf der einen Seite der Wandung des Prüflings ein Unterdruck erzeugt wird. Dieses kann dadurch geschehen, daP der Prüfling selbst an eine Vakuumpumpe angeschlossen wird und von außen einer Testgas-Atmosphäre (sei es durch Sprühen oder durch Erzeugung der Testgas-Atmosphäre in einer Prüfkammer) ausgesetzt wird. Eine andere Möglichkeit besteht darin, daß der Prüfling Testgas enthält und in eine Prüfkammer eingesetzt wird, die ihrerseits evakuiert wird.

Eine für die Durchführung der Vakuumlecksuche geeignete Apparatur ist deshalb mit einer Vakuumpumpe ausgerüstet, die der Erzeugung des Differenzdruckes dient. Häufig werden dabei Gasballastpumpen verwendet. Bei Lecksuchgeräten, die mit einem Massenspektrometer als Testgastetektor ausgerüstet sind, muß zusätzlich noch eine Hochvakuumpumpe vorgesehen sein, damit der für den Betrieb eines Massenspektrometers notwendige Druck von etwa 10⁻⁴ mbar erzeugt werden kann.

Weiterhin benötigt ein Lecksuchgerät für die Vakuumlecksuche mehrere Ventile, mit deren Hilfe der Lecksuchprozess gesteuert wird. Es ist bekannt, diese Ventile elektromagnetisch zu betätigen und mit einer in Schließrichtung wirkenden Feder auszurüsten, damit alle Ventile für den Fall eines Stromausfalls ihre Schließstellung einnehmen. Ventile dieser Art sind großvolumig, aufwendig und damit kostspielig.

Der vorliegenden Erfindung liegt die Aufgabe zugrunde, bei einem Lecksuchgerät der eingangs genannten Art den Aufwand für die Ventile zu reduzieren.

Erfindungsgemäß wird diese Aufgabe dadurch gelöst, daß mindestens zwei Ventile (11 bis 14) pneumatisch betätigbare Ventile sind, daß die Betätigungseinrichtungen (15) der pneumatisch betätigbaren Ventile (11 bis 14) jeweils einen Antriebszylinder (16) und einen Antriebskolben (18) umfassen und daß der jeweilige Antriebszylinder (16) über Steuerventile (21, 22) derart mit der Vorvakuumpumpe (1) in Verbindung steht, daß der von der Vorvakuumpumpe (1) erzeugte Unterdruck für die Steuerung der pneumatisch betätigbaren Ventile (11 bis 14) verwendbar ist. Dadurch, daß der von der Vakuumpumpe erzeugte Unterdruck für die Steuerung der Ventile verwendet wird, können elektromag-netisch arbeitende Betätigungseinrichtungen entfallen.

Ist die im Lecksuchgerät vorhandene Vakuumpumpe eine Gasballastpumpe, dann ist es zweckmäßig, die Antriebszylinder der Ventile mit dem Gasballastanschluß zu verbinden. Das im Bereich des Gasballastanschlusses vorhandene Vakuum reicht zur Betätigung der Ventile aus. Eine Störung des von der Vakuumpumpe erzeugten Vakuums tritt bei einer Betätigung der Ventile nicht ein.

Sind die Ventile mit einer Feder ausgerüstet, deren Federkraft in Schließrichtung wirkt, dann ist es zweckmäßig, beide Seiten des Antriebszylinders über Steuerventile mit der Vakuumpumpe bzw. mit dem Gasballastanschluß der Vakuumpumpe, zu verbinden. Es besteht dann die Möglichkeit, die Wirkung der Federkraft durch Erzeugung eines Unterdrucks auf der einen Seite des Antriebszylinders zu unterstützen. Der Vorteil dieser Maßnahmen liegt darin, daß die Federkraft und damit die Größe der Feder klein gehalten werden kann, ohne auf schnelle und sichere Schließvorgänge bei den Ventilen verzichten zu müssen.

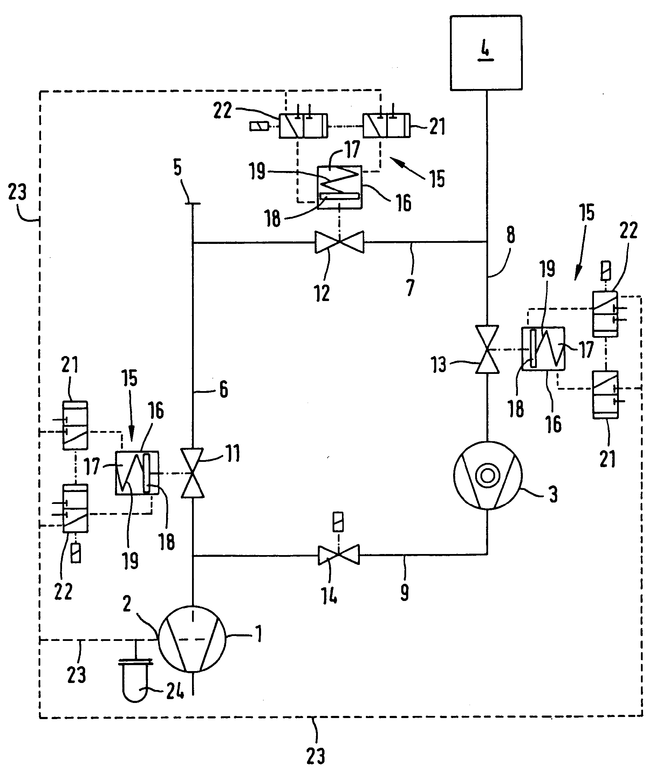

Weitere Vorteile und Einzelheiten der Erfindung sollen anhand eines in der Figur dargestellten Schaltschemas eines Lecksuchgerätes erläutert werden.

Entsprechend dem Schema umfaßt das Lecksuchgerät eine Vorvakuumpumpe 1 mit einem Gasballastanschluß 2, eine Hochvakuumpumpe 3 und einen Testgas-Detektor 4, der zum Beispiel als Massenspektrometer ausgebildet ist. Der Einlaß des Lecksuchers ist mit 5 bezeichnet. An diesen werden je nach Art der durchzuführenden Lecksuche ein Prüfling oder eine Prüfkammer angeschlossen. Der Einlaß 5 ist über die Leitung 6 mit der Vakuumpumpe 1 und über die Leitung 7 mit dem Massenspektrometer 4 verbunden. Das Massenspektrometer 4 ist seinerseits über die Leitung 8 mit dem Einlaß der Hochvakuumpumpe 3 verbunden, deren Auslaß über die Leitung 9 mit der Vakuumpumpe 1 in Verbindung steht.

Die Leitungen 6 bis 9 sind mit Ventilen 11 bis 14 ausgerüstet, von denen die Ventile 11 bis 13 mit der erfindungsgemäßen Betätigungseinrichtung 15 ausgerüstet sind. Die Ventile 11 bis 14 dienen der Steuerung des Ablaufs der Lecksuchprozesse, die im wesentlichen die Schritte Evakuieren und Lecksuchen, vorzugsweise mit unterschiedlichen Empfindlichkeiten, umfassen.

Die Ventile 11 bis 13 sind jeweils mit der erfindungsgemäßen Betätigungseinrichtung 15 ausgerüstet. Diese umfassen jeweils den Antriebszylinder 16, der die Steuerkammer 17 bildet. In dieser Steuerkammer 17 befinden sich der Antriebskolben 18 und eine Feder 19, deren Federkraft in Schließrichtung wirkt.

Beide Seiten des Antriebszylinders 16 bzw. der Steuerkammer 17 sind jeweils über Steuerventile 21, 22 (3/2-Wege-Ventile) und über die gestrichelt dargestellten Leitungen 23 mit dem Gasballastanschluß 2 der Vakuumpumpe 1 verbunden. Über eine nicht dargestellte Steuerung erfolgt die Betätigung der Steuerventile 21, 22 zu dem jeweils gewünschten Zeitpunkt. Die elektrische Betätigung erfolgt für beide Ventile gleichzeitig. Im stromlosen Zustand wird die Steuerkammer (17) für die Öffnung des Hauptventils von außen belüftet, die Steuerkammer für die Schließung des Hauptventils mit Unterdruck versorgt. Im eingeschalteten Zustand ist die Funktion umgekehrt. Ein Unterdruckvorrat von ca. 0,5 - 1 Liter Volumen, sowie eine schwache Spiralfeder im Federbalg sichern die selbsttätige Schließung des Hauptventils bei Stromausfall. Der insgesamt für die beschriebenen Betätigungseinrichtungen der Ventile 11, 12 und 13 ist im Vergleich zum Stand der Technik relativ klein. Dadurch, daß auch die Wirkung der Feder 18 durch Unterdruck unterstützt werden kann, ist ein schnelles und sicheres Schließen der Ventile gewährleistet.

Dem Gasballastanschluß 2 ist beim dargestellten Ausführungsbeispiel noch eine Unterdruck-Vorratsdose 24 zugeordnet. Dadurch ist auch bei Stromausfall ein schnelles Schließen der Ventile sichergestellt. Außerdem sind störende Einflüsse eines Luftschluckes im Bereich des Gasballastanschlusses der Pumpe 1 vermieden.

## Patentansprüche

1. Lecksuchgerät für den Einsatz bei der Vakuumlecksuche mit einem Testgasdetektor (4), mit einer Vorvakuumpumpe (1) sowie mit dem Ablauf des Lecksuchprozesses steuernden Ventilen (11 bis 14), dadurch gekennzeichnet, daß mindestens zwei Ventile (11 bis 14) pneumatisch betätigbare Ventile sind, daß die Betätigungseinrichtungen (15) der pneumatisch betätigbaren Ventile (11 bis 14) jeweils einen Antriebszylinder (16) und einen Antriebskolben (18) umfassen und daß der jeweilige Antriebszylinder (16) über Steuerventile (21, 22) derart mit der Vorvakuumpumpe (1) in Verbindung steht, daß der von der Vorvakuumpumpe (1) erzeugte Unterdruck für die Steuerung der pneumatisch betätigbaren Ventile (11 bis 14) verwendbar ist.

2. Lecksuchgerät nach Anspruch 1, dadurch gekennzeichnet, daß die Vakuumpumpe (1) eine Gasballastpumpe ist und daß die Steuerventile (21, 22) mit dem Gasballastanschluß (2) in Verbindung stehen.

3. Lecksuchgerät nach Anspruch 1 oder 2, dadurch gekennzeichnet, daß den Antriebskolben (18) Federn (19) zugeordnet sind, deren Federkraft in Schließrichtung wirkt.

4. Lecksuchgerät nach einem der vorhergehenden Ansprüche, dadurch gekennzeichnet, daß der Vakuumpumpe (1) eine Unterdruck-Vorratsdose (24) zugeordnet ist.

5. Lecksuchgerät nach einem der vorhergehenden Ansprüche, dadurch gekennzeichnet, daß die Steuerventile (21, 22) als 3/2-Wege-Ventile ausgebildet sind.

## Claims

1. Leak detector apparatus for use in vacuum leak detection, with a test gas detector (4), a fore-vacuum pump (1) and valves (11 to 14) which control the sequence of the leak detection process, characterized in that two or more valves (11 to 14) are pneumatically actuated valves, in that the actuating mechanisms (15) of the pneumatically actuated valves (11 to 14) each comprise a drive cylinder (16) and a drive piston (18) and in that each drive cylinder (16) is connected by means of control valves (21, 22) to the fore-vacuum pump (1) in such a manner that the negative pressure generated by the fore-vacuum pump (1) can be used for controlling the pneumatically actuated valves (11 to 14).

2. Leak detector apparatus according to Claim 1, characterized in that the fore-vacuum pump (1) is a gas ballast pump and in that the control valves (21, 22) are connected to the gas ballast coupling (2).

3. Leak detector apparatus according to either of Claims 1 or 2, characterized in that there are assigned to the drive pistons (18) springs (19) which act, by spring tension, in the closing direction.

4. Leak detector apparatus according to any one of the preceding Claims, characterized in that there is assigned to the vacuum pump (1) a negative pressure reservoir (24).

5. Leak detector apparatus according to any one of the preceding Claims, characterized in that the control valves (21, 22) are constructed as 3/2-way valves.

## Revendications

1. Appareil de détection de fuites à mettre en oeuvre lors de la détection de fuites de vide avec un détecteur de gaz de test (4), comportant une pompe à vide préparatoire (1) ainsi que des vannes (11 à 14) qui commandent le déroulement du processus de détection de fuites, caractérisé par le fait qu'au moins deux vannes (11 à 14) sont des vannes à manoeuvre pneumatique, que les dispositifs de manoeuvre (15) des vannes à manoeuvre pneumatique (11 à 14) comportent pour chacune un cylindre d'entrainement (16) et un piston d'entrainement (18) et que le cylindre d'entrainement respectif (16) est, par l'intermédiaire de robinets de commande (21, 22), relié à la pompe à vide préparatoire (1) de façon telle que la dépression produite par la pompe à vide préparatoire (1) est utilisable pour la commande des vannes à manoeuvre pneumatique (11 à 14).

2. Appareil de détection de fuites selon la revendication 1, caractérisé par le fait que la pompe à vide (1) est une pompe à ballast de gaz et que les robinets de commande (21, 22) sont reliés au raccord (2) de ballast de gaz.

3. Appareil de fuites selon la revendication 1 ou 2, caractérisé par le fait qu'aux pistons d'entrainement (18) correspondent des ressorts (19) dont la force agit dans le sens de la fermeture.

4. Appareil de détection de fuites selon l'une des revendications précédentes, caractérisé par le fait qu'à la pompe à vide (1) correspond une boîte (24) de réserve de vide.

5. Appareil de détection de fuites selon l'une des revendications précédentes, caractérisé par le fait que les robinets de commande (21, 22) sont conçus sous forme de robinets distributeurs 3/2.
